# EUROPÄISCHE PATENTSCHRIFT

(11) **EP 1 082 385 B1**
(45) Veröffentlichungstag und Bekanntmachung des Hinweises auf die Patenterteilung: **05.06.2002**
(21) Anmeldenummer: 99908937.8
(22) Anmeldetag: 20.02.1999
(51) Int. Cl.: C08J 9/32, C08J 9/00

(54) **GIESSMASSEN FÜR DIE HERSTELLUNG VON SANITÄRFORMTEILEN MIT MEHR ALS EINER SICHTSEITE**
CASTING MATERIALS FOR PRODUCING SHAPED PARTS WITH MORE THAN ONE VISIBLE FACE, FOR SANITARY APPLIANCES
MATIERES A COULER POUR LA PRODUCTION DE PIECES MOULEES SANITAIRES PRESENTANT PLUS D'UNE FACE VISIBLE

(30) Priorität: 19.03.1998 DE 19812123
(43) Veröffentlichungstag der Anmeldung: 14.03.2001
(73) Patentinhaber: BLANCO GmbH + Co KG, 75038 Oberderdingen (DE)
(72) Erfinder: HAJEK, Andreas, D-74336 Brackenheim (DE); WILHELM, Thomas, D-75056 Sulzfeld (DE); HARKE, Stefan, D-74889 Sinsheim-Rohrbach (DE)
(74) Vertreter: Hoeger, Stellrecht & Partner
(86) Internationale Anmeldenummer: EP9901122
(87) Internationale Veröffentlichungsnummer: WO9947594

(56) Entgegenhaltungen:
- EP-A- 0 559 254
- US-A- 4 419 459
- US-A- 5 223 586
- US-A- 5 690 872

## Beschreibung

Die Erfindung betrifft eine Gießmasse für die Herstellung von Sanitärformteilen mit mehr als einer Sichtseite sowie Sanitärformteile, welche aus diesen Gießmassen hergestellt sind.

Typische Gießmassen zur Herstellung von Sanitärformteilen einschließlich Küchenspülen und dergleichen sind Gießmassen, die einen auf Methylmethacrylat basierenden Sirup sowie einen anorganischen Füllstoff umfassen, wie sie beispielsweise in dem deutschen Patent DE-24 49 656, der europäischen Patentanmeldung EP 0 361 101 oder auch der WO 95/23825 beschrieben sind.

Diese Gießmassen eignen sich sehr gut für die Herstellung von Formteilen, bei denen lediglich eine sogenannte Sichtseite vorhanden ist und bei denen die der Sichtseite gegenüberliegende Seite des Formteiles nach dem Einbau des Formteiles nicht mehr sichtbar ist. Das Aussehen der der Sichtseite gegenüberliegenden Seite des Formteils ist damit für die Marktgängigkeit des Produktes ohne Bedeutung und muß demzufolge insbesondere nicht vorgegebenen Konturen folgen bzw. keine glatte Oberfläche aufweisen.

Insbesondere Formteile, welche aus Acrylatgießmassen hergestellt wurden, weisen einen recht hohen Reaktionsschrumpf auf. Die für die Herstellung der Formteile verwendeten Dispersionen beinhalten häufig ca. 30 bis 40 Gew.-% Methylmethacrylatmonomer, welches bei der Polymerisation um ca. 24 Vol.-% schrumpft. Umgerechnet auf die auf Methylmethacrylat basierenden Dispersionen führt dies zu einem Schrumpf, der Dispersionen bzw. Gießmassen von ca. 10 Vol.-%. Da dieser Schrumpf zumindest zu großen Teilen auszugleichen ist, um marktgängige Produkte zu erhalten, ist es notwendig, mit einer aufwendigen Werkzeugkonstruktion mit "schwimmenden" Werkzeughälften, die mit pneumatischem oder hydraulischem Druck zusammengepreßt werden, dem Schrumpfeffekt Rechnung zu tragen (vgl. z. B. EP 0 019 867 A1).

Gleichzeitig sind aufwendige Temperaturprogramme während des Polymerisationsvorganges notwendig. So muß die Sicht- oder Gutseite des Formteils zuerst aufgeheizt werden, während die Rückseite zunächst noch kühl gehalten wird, um dort die Polymerisation nur verzögert eintreten zu lassen. Erst nach ca. 10 min. kann auch dort die Polymerisationstemperatur von ca. 100 °C angewendet werden.

Durch diesen Aufwand, insbesondere durch die unterschiedliche Temperaturanwendung, kann zwar eine optisch ansprechende Gebrauchseite oder Sichtseite des Formteils erreicht werden, es lassen sich aber lediglich Formteile herstellen, die nur eine solche Sicht- oder Gutseite aufweisen. Bei Küchenspülen beispielsweise sind diese Verfahren bzw. Formteile nur deshalb einsetzbar, weil die Spüle bisher so in Küchenunterschränke eingebaut wird, daß die Rückseite durch die Möbelteile abgedeckt wird.

Bei Gießmassenrezepturen, wie sie beispielsweise aus der EP 0 361 101 A1 bekannt sind, welche sehr grobkörnige Füllstoffe verwendet, führt der trotz spezieller Werkzeugkonstruktionen vom Gießwerkzeug her ausgeglichene Schrumpf zu sehr rauhen Oberflächen, da zwischen den groben Füllstoffkörnchen, die an der Oberfläche verbleiben, die Polymermatrix sich in erheblichem Maße von der Werkzeugoberfläche ablöst und mikroskopische Vertiefungen in der Sichtseitenoberfläche bildet. Diese erhöhte Rauheit führt im Gebrauch zur Ansammlung von Schmutzpartikeln. Gleichzeitig ist es schwieriger, anhaftende Schmutzpartikel wieder von der Oberfläche zu entfernen. Aufgrund der natürlich ebenfalls relativ großen Rauheit der Rückseiten ist es schwierig, auch hier eine Reinigung vorzunehmen. Aufgrund der Vielzahl von Vertiefungen werden Staubpartikel von der der Sichtseite gegenüberliegenden Rückseite festgehalten und bewirken eine erhöhte Verschmutzungsanfälligkeit.

Aufgabe der vorliegenden Erfindung ist es, eine Gießmasse zur Verfügung zu stellen, welche die Bildung von Formkörpern mit nicht nur einer, sondern zwei oder mehreren Sichtseiten erlaubt.

Diese Aufgabe wird erfindungsgemäß dadurch gelöst, daß die Gießmasse, die einen auf Methylmethacrylat basierenden Sirup sowie bis zu 85 Gew.-% eines anorganischen Füllstoffes umfaßt, darüber hinaus komprimierbare, treibmittelgefüllte Mikrohohlkügelchen mit einer in MMA im wesentlichen unlöslichen Kunststoffwandung umfaßt, wobei der Volumenanteil der Mikrohohlkügelchen am Gesamtvolumen der Gießmasse im Bereich von 5 bis 50 Vol.-% liegt.

Mit der erfindungsgemäßen Gießmasse lassen sich Formteile herstellen, bei denen die Oberflächenrauhigkeit der Rückseite ungefähr der der Sichtseite entspricht. Damit erschließen sich die Gießmassen zusätzlich zu den bisher daraus hergestellten Formteilen weitere Anwendungsmöglichkeiten.

Herkömmlicherweise aus Gießmassen hergestellte Formteile (z. B. Küchenspülen) können in einer neuen Art und Weise verwendet werden, d. h. die Küchenspülen beispielsweise so in eine Arbeitsfläche eingebaut werden, daß auch deren Rückseite sichtbar bleiben kann.

Ein weiterer Vorteil liegt darin, daß die Sichtseite gut zu reinigen ist, auch in den Fällen, in denen relativ grobkörnige Füllstoffe verwendet wurden. Dies gilt auch bei Formteilen aus Materialien, bei denen der grobkörnige Füllstoff im Bereich von ca. 100 µm bis über 1000 oder gar 3000 µm liegt.

Während bei den herkömmlichen Rezepturen der Füllstoffgehalt neben einer Verbesserung der Gebrauchseigenschaften der hergestellten Formteile eine Verringerung des Schrumpfeffektes bewirkte, war der Füllstoffgehalt auch unter dem Gesichtspunkt der Verringerung des Volumens an Monomer entscheidend, da die Schrumpfeffekte natürlich umso geringer waren, je geringer der Anteil des Sirups an der Gießmasse war. Eine weitere Reduzierung des Schrumpfeffektes konnte durch die Verwendung von MMA-Präpolymeren (sogenanntem Polymethylmethacrylat, kurz PMMA genannt) erzielt werden, was ebenfalls eine Verminderung des Schrumpfeffektes bewirken konnte. Der Einsatz von PMMA ist allerdings nur in bestimmtem Umfang möglich, da er die Viskosität des Sirups beträchtlich erhöht.

Gemäß der vorliegenden Erfindung jedoch kann der Füllstoffanteil allein an der erwünschten Erzielung der Gebrauchseigenschaften des Formteils ausgerichtet werden und braucht auf Schrumpfeffekte keine Rücksicht mehr zu nehmen.

Demzufolge sind auch Gießmassen mit einem Füllstoffgehalt von weniger als 20 Gew.-% problemlos möglich.

Der bevorzugte Volumenanteil der Mikrohohlkügelchen liegt im Bereich von 8 bis 45 Vol.-% der Gießmasse.

Die Partikelgröße der Mikrohohlkügelchen unterliegt keinen besonderen Beschränkungen, jedoch sollte die Partikelgröße unter 500 µm betragen, um auszuschließen, daß in Fällen, in denen die Mikrohohlkügelchen an der Oberfläche zu liegen kommen, bei der Beanspruchung der Oberfläche diese beschädigt und dann zu Vertiefungen in der Oberfläche des Formteils führen können.

Bereits zuvor wurde angesprochen, daß PMMA als modifizierendes Mittel für den Sirup eingesetzt werden kann, insbesondere im Hinblick auf eine Verringerung der Schrumpfeffekte, aber auch im Hinblick auf die Moderierung von Viskositäten der Gießmasse.

Aus letzteren Gründen kann auch die Zugabe von PMMA zu dem Sirup gemäß der vorliegenden Erfindung angezeigt sein, wobei hier wie im Stand der Technik PMMA mit einem Molekulargewicht von 50 000 bis 250 000 (M_{w}) zum Einsatz kommt und im Sirup in einer Menge bis zu 20 Gew.-%, bezogen auf die Masse des Sirups, vorliegen kann.

Bei den Mikrohohlkügelchen handelt es sich vorzugsweise um thermoplastische Hohlkügelchen mit elastischen Eigenschaften, die durch einen Expansionsprozeß hergestellt sind.

Als geeignet erwiesen haben sich beispielsweise die Mikrohohlkügelchen, die aus der EP 0 559 254 A1 bekannt sind, welche aber nur in expandiertem Zustand verwendet werden können. Versuche mit nichtexpandierten Mikrohohlkügelchen dieses Typs zeigen, daß damit die Herstellung von Formteilen mit mehr als einer Sichtseite nicht möglich ist.

Nichtexpandierte Hohlkügelchen sind zwar schon für die Kompensation von Schrumpfeffekten beschrieben worden, jedoch wurde, wie oben erwähnt, überraschend gefunden, daß lediglich bereits expandierte Mikrohohlkügelchen im vorliegenden Anwendungsfall in der MMA-Dispersion die gewünschte Wirkung zeigen, obwohl die Aushärtebedingungen für die Gießmasse ungefähr den Bedingungen für das Expandieren der Hohlkügelchen entsprechen. Expandierte Mikrohohlkügelchen wurden bislang lediglich als Leichtfüllstoff empfohlen.

Diese Mikrohohlkügelchen müssen in geeigneter Weise in die Dispersion eingearbeitet werden. Dies kann beispielsweise dadurch geschehen, daß eine an sich fertige Dispersion/Gießmasse in einen Druckbehälter gegeben wird und mit den Mikrohohlkügelchen vorsichtig unter innigem Rühren portionsweise versetzt wird. Wichtig ist dabei, daß der Druckbehälter in geeigneter Weise mit Druck beaufschlagt wird, wobei geeignete Drücke zwischen 1 und 5 bar liegen. Bei zu niedrigen Drücken läßt sich die Form nicht befüllen, bei zu hohen Drücken kommt es offenbar zu einer Zerstörung der Kügelchen, so daß der erwünschte Effekt nicht mehr beobachtbar ist.

Bei der Verarbeitung der erfindungsgemäßen Gießmasse ist von Bedeutung, daß der Behälterdruck nach dem Befüllen des Werkzeuges zur Herstellung des Formteiles noch einige Zeit ansteht, so daß über einen Komprimiervorgang der Mikrohohlkügelchen noch Masse in die Form nachgeschoben werden kann. Während der Durchführung des Temperaturprogrammes kommt es dann zu einer Erhitzung der Gießmasse und damit auch des in den Mikrohohlkügelchen vorhandenen Treibmittels und damit zu einer schrumpfkompensierenden Re-Expansion der Mikrohohlkügelchen.

Wie bereits zuvor beschrieben, läßt sich die Zugabe der Mikrohohlkügelchen auf viele Formulierungen von Gießmassen anwenden, sowohl, was die Formulierung der Kunststoffmatrix (Sirup) als auch, was die in der Gießmasse verwendeten Füllstoffe betrifft. Aufgrund der schrumpfkompensierenden Wirkung ist es sogar möglich, Formteile aus stark schrumpfenden Acrylatsirupen herzustellen, die völlig auf Füllstoffe verzichten. Damit ist z. B. die Herstellung von Handwaschbecken oder Toilettenschüsseln denkbar, die bisher aufgrund der Sichtbarkeit der Formteilrückseite im wesentlichen nur aus Keramik angeboten wurden.

Eine bevorzugte Größe der Mikrohohlkügelchen liegt im Bereich von 50 bis 80 µm, jedoch lassen sich problemlos auch Teilchen im Bereich von 5 bis 100 µm einsetzen.

Bei den bevorzugten Mikrohohlkügelchen besteht die Wandung der Kügelchen aus einem Copolymerisat aus PMMA, PAN und PMAN, wobei dies jedoch keine absolute Notwendigkeit für die Herstellung der Wandung der Mikrohohlkügelchen darstellt, da jedes andere thermoplastische Material verwendet werden kann, welches in MMA im wesentlichen unlöslich ist und eine ausreichende Flexibilität aufweist.

Die Mikrohohlkügelchen können zum Vermeiden der Agglomeration beschichtet sein, wobei hier insbesondere Calciumcarbonat in Frage kommt. Der Gewichtsanteil dieser Beschichtung kann z. B. 85 Gew.-% betragen, wobei dann die spezifische Dichte dieser Teilchen selbstverständlich erheblich höher liegt als die der unbeschichteten.

Die mit der erfindungsgemäßen Gießmasse hergestellten Formteile weisen aufgrund der speziellen Rezeptierung in der Regel eine etwas geringere Schlagzähigkeit als andere, herkömmlich hergestellte Formteile auf. Andererseits weisen die hier insbesondere angestrebten Formteile wie Küchenspülen, andere Sanitärformteile oder dergleichen, eine relativ hohe Scherbendicke auf, so daß die Verminderung der Schlagzähigkeit problemlos ist.

Will man der Verringerung der Schlagzähigkeit entgegenwirken, so kann der erfindungsgemäßen Gießmasse ein weiteres Additiv zugesetzt werden, um die Schlagzähigkeit wieder zu erhöhen. Als geeignet haben sich hierfür insbesondere Elastomerpartikel oder -partikelagglomerate erwiesen, insbesondere solche mit einer sogenannten Kern-Hülle-Struktur. Beispiele für solche Additive sind in den deutschen Offenlegungsschriften DE 40 40 986 und DE 43 02 552 sowie den europäischen Offenlegungsschriften EP 0 291 941 und EP 0 776 917 beschrieben. Der Anteil solcher Elastomerpartikel oder -partikelagglomerate, die in der Regel eine Teilchengröße < 100 µm aufweisen (die Teilchengröße bezieht sich sowohl auf vereinzelt vorliegende Elastomerpartikel oder auch auf die Agglomerate, falls die Partikel in agglomeriertem Zustand eingesetzt werden), wobei die Menge solcher Teilchen, bezogen auf die Masse des Sirups, in einem Bereich von 5 Gew.-% bis weniger als 20 Gew.-% eingesetzt werden. Besonders gute Resultate wurden mit einem Anteil Elastomerpartikel oder -partikelagglomerate im Bereich von 10 bis 18 Gew.-% erhalten.

Das Elastomer der Partikel kann aus teilvernetztem Polymer bestehen.

Bei den zuvor angesprochenen Elastomerpartikeln mit einer Kern-Hülle-Struktur wird der Kern der Partikel von dem Elastomer gebildet und die Hülle aus einem matrixverträglichen, im Sirup im wesentlichen unlöslichen Polymer gebildet sein.

Bevorzugt wird die Hülle der Elastomerpartikel an das Kernelastomer chemisch gebunden sein. Bevorzugt umfaßt die Hülle ein thermoplastisches Polymer, alternativ ein teilvernetztes Polymer.

Bei bevorzugten Partikeln ist die Hülle im Sirup der Gießmasse zumindest teilweise quellbar, so daß über die Verwendung dieser Elastomerpartikel die Viskositätseinstellung des Sirups mindestens teilweise erfolgen kann. Unter Umständen kann hier sogar auf den Einsatz von PMMA zum Moderieren der Viskosität der Gießmasse verzichtet werden.

Besonders gut mit dem Sirup verträgliche Hüllpolymere sind Acrylatpolymere, die natürlich ausgezeichnet mit dem Acrylatsirup verträglich sind.

Im Fall, daß der Kern der Elastomerpartikel aus einem teilvernetzten Polysiloxan besteht, wird dieses zur Bildung der Hülle bevorzugt mit einem Acrylatmonomer gepfropft sein.

Der Aufbau der Kern-Hülle-Elastomerpartikel weist bevorzugt einen Gewichtsanteil des Kerns im Bereich von 40 bis 60 Gew.-%, bezogen auf das durchschnittliche Gesamtgewicht der Elastomerpartikel auf.

Wie bereits zuvor mehrfach diskutiert, eignen sich die erfindungsgemäßen Gießmassen insbesondere zur Herstellung von Sanitärformteilen, wobei hierunter auch Küchenspülen oder Ausgußbecken verstanden werden. Andere Sanitärformteile sind zum Beispiel Badewannen, Duschtassen, Handwaschbecken, Toilettenschüsseln oder auch Arbeitsplatten.

Die erfindungsgemäße Gießmasse eignet sich insbesondere in den Fällen, in denen Additive zur Verbesserung der Schlagzähigkeit in Form von Elastomerpartikeln zugesetzt werden, für die Herstellung von Küchenspülen mit relativ geringen Bodenstärken, wobei hierunter Bodenstärken verstanden werden, die geringer als 7 mm sind.

Aufgrund der sehr guten Effekte, die sich mit dem Zusatz der Elastomerpartikel als Additive erzielen lassen, sind sogar Bodenstärken ≤ 5 mm erzielbar.

Solche geringen Bodenstärken bei den Küchenspülen, die sich analog selbstverständlich auch auf andere Formteile anwenden lassen, bedeuten nicht nur eine Einsparung an Polymermaterial und damit eine kostengünstigere Herstellung, sondern bedeuten darüber hinaus auch kürzere Zykluszeiten bei der Herstellung der Formteile sowie insgesamt ein geringeres Gewicht, was in der Handhabung bei der Verarbeitung bzw. beim Einbau dieser Formteile Vorteile zur Folge hat.

Diese und weitere Vorteile der Erfindung werden im folgenden anhand von Beispielen noch näher erläutert.

Die erfindungsgemäßen Gießmassen werden in an sich bekannter Weise hergestellt, indem man PMMA, soweit es in den Rezepturen Verwendung findet, in dem Monomermethylmethacrylat (im folgenden kurz MMA genannt) löst, die Füllstoffe und sonstigen Addititve sowie den Polymerisationsstarter dem Sirup zugibt.

Die Temperaturzyklen zur Aushärtung der Gießmasse in den Formenhohlkörpern unterscheiden sich von den Temperaturzyklen, die im Stand der Technik empfohlen wurden, nicht. Bei den nachfolgenden Vergleichsbeispielen und Beispielen wurde folgender Temperaturzyklus verwendet: Vor und während der Befüllung wird die Sichtseite der Form auf 60 °C und deren Rückseite auf 40 °C temperiert. Die Gießmasse hat beim Befüllen in der Regel Raumtemperatur.

Bei der fertig befüllten Form wird die Temperatur der Sichtseite auf 100 °C erhöht und auf diesem Niveau 30 min. gehalten.

Nach dem Befüllen der Form wird deren Rückseitentemperatur für weitere 10 min. auf 40 °C temperiert gehalten und dann für den Rest des Zyklus (ca. 20 min.) auf 100 °C gehalten.

Die ausgehärteten Formteile können bei 100 °C entformt werden.

In den (Vergleichs-)Beispielen kann in den Fällen, in denen Cristobalitmehl zum Einsatz kommt, entsprechendes Quarzmehl verwendet werden, ohne daß sich die gemessenen mechanischen Eigenschaften ändern.

Die erfindungsgemäß zu verwendenden deformierbaren, treibmittelgefüllten Mikrohohlkügelchen können sowohl in den Sirup (Lösung von PMMA in MMA) oder auch MMA alleine gegeben werden oder auch der fertig gemischten herkömmlichen Gießmasse zugegeben werden.

Überraschenderweise zeigt sich, daß schon sehr geringe Mengen der erfindungsgemäß zu verwendenden Mikrohohlkügelchen ausreichen, um eine vollständige Schrumpfkompensation bei den Gießmassen zu erreichen.

Werden zur Erhöhung der Schlagzähigkeit Elastomerpartikel oder -partikelagglomerate verwendet, sollen diese bevorzugt zunächst in MMA vordispergiert werden.

Die Schlagzähigkeit wurde nach dem sogenannten Charpy-Verfahren gemessen, angelehnt an die DIN 53453. Die Probendicken ergeben sich dabei in Abwandlung von der Norm aus der Dicke des Formteilausschnittes, an dem die Prüfung vorgenommen wird. Alle anderen Vorgaben der Norm werden beachtet.

Die Schlagbelastung wird jeweils so aufgebracht, daß senkrecht zur Sichtseite des Formteils geschlagen wird. Für die Schlagversuche wird ein Gerät Modell 5102 der Fa. Zwick in Ulm, Deutschland, verwendet.

Bei den nachfolgend beschriebenen Beispielen wird die Prüfung der Oberflächenqualität mit einer Rauheitsprüfung vorgenommen, wobei hierfür ein Rauhtiefenmeßgerät verwendet wird (Modell T2000 mit Linearvorschubeinheit LV50 der Firma Hommelwerke, Villingen-Schwenningen, Deutschland). Im folgenden wird als Rauhigkeit Rₘₐₓ angegeben.

### Vergleichsbeispiel 1:

1,8 kg PMMA einer normalen Type im Molekulargewichtsbereich M_{w} von 50 000 bis 200 000 wird in 8,2 kg MMA gelöst und mit Entformungshilfsmittel (27 g Stearinsäure der Fa. Merck, Deutschland) und Vernetzer (200 g Trimethylolpropantrimethacrylat der Fa. Degussa, Deutschland) versetzt. Dann wird mit 17 kg Cristobalitmehl (alle Partikel < 200 µm, silanisiert, in der Korngrößenverteilung 5 % > 100 µm, 42 Gew.-% > 32 µm) auf einen Füllstoffgehalt von 63 Gew.-% der Gießmasse eingestellt. Das Volumen der Komponenten MMA und PMMA beträgt 10 000 cm³, das Volumen des Füllstoffes 7 391 cm³. Die Gießmasse ist bei den üblichen angewendeten Drucken von max. 5 bar nicht komprimierbar. Nach Zusatz von Peroxiden (35 g Perkadox 16 und 80 g Laurox, jeweils von der Fa. Akzo, Niederlande) wird in geeigneten Formenhohlkörpern polymerisiert, so daß eine Küchenspüle entsteht. Die Befüllzeit betrug ca. 45 sec., der Befülldruck war 3,5 bar.

Von einer aus dem Beckenboden (9 mm dick) des Formteils entnommenen Probe wurden die Schlagzähigkeit und die Rauheit der Oberfläche bestimmt. Zusätzlich wurde eine Probe aus der Seitenwand (7 mm dick) des Beckens entnommen. Aufgrund der hohen Rauhigkeit der Rückseite dieses Teils konnte ein Rauhigkeitsmeßwert derselben nicht angegeben werden.

### Ergebnisse:

Schlagzähigkeit beider Proben: 4,5 kJ/m²
Rauheit (Rₘₐₓ) der Sichtseite beider Proben: 2,21 µm (vorgegeben durch die Oberflächenbeschaffenheit der Form)
Rauheit der Rückseitenprobe (Seitenwand): nicht meßbar
Rauheit der Rückseitenprobe (Beckenboden): nicht meßbar

### Vergleichsbeispiel 2:

2,0 kg PMMA einer normalen Type im Molekulargewichtsbereich M_{w} von 50 000 bis 250 000 wird in 8,0 kg MMA gelöst und mit Entformungshilfsmittel (35 g Stearinsäure der Fa. Merck, Deutschland) und Vernetzer (200 g Trimethylolpropantrimethacrylat der Fa. Degussa, Deutschland) versetzt. Es handelt sich bei diesem Beispiel um einen verhältnismäßig dickflüssigen Sirup. Dann werden 27 kg eines kantengerundeten Sandes im Korngrößenbereich von 200 bis 2 000 µm (eine Mischung aus den Typen 1/8 und 2/9 SIG silanisiert der Firma Dorfner in Amberg, Deutschland) zugegeben, was einen Füllstoffanteil von 73 Gew.-% der Gießmasse ausmacht. Das Volumen der Komponenten PMMA und MMA beträgt 10 000 cm³, das Volumen des Füllstoffes 10 189 cm³, die Gießmasse ist bei den normalen angewendeten Drucken von max. 5 bar nicht komprimierbar. Nach dem Zusatz von Peroxiden (40 g Perkadox 16 und 80 g Laurox, jeweils von der Fa. Akzo, Niederlande) wird die Masse in geeigneten Formen (Küchenspüle) so polymerisiert, daß die Sicht- oder Gebrauchsseite des Formteils nach unten zeigt. Die Befüllzeit war ca. 70 sec., der Befülldruck war 5 bar.

Die flächenmäßige Kornverteilung des Füllstoffs im Formteil ist sehr gleichmäßig, gleichzeitig hat ein leichtes Absinken des Füllstoffes zur Gebrauchsseite des Formteils stattgefunden.

Die Rückseite des erhaltenen Formteils ist teilweise sehr rauh. Die Rückseite des Ausgußbereichs weist nach dem Befräsen kleine Löcher auf, die die Dichtigkeit einer montierten Ablaufgarnitur beeinträchtigen.

Von einer Probe aus dem Beckenboden (11 mm dick) des Formteils wurden die Schlagzähigkeit und die Rauheit der Oberfläche bestimmt. Zusätzlich wurde eine Probe aus der Seitenwand (9 mm dick) des Beckens entnommen. Aufgrund der hohen Rauhigkeit der Rückseite dieses Teils konnte ein Rauhigkeitsmeßwert jedoch nicht angegeben werden.

### Ergebnisse:

Schlagzähigkeit beider Proben: 2,0 kJ/m²
Rauheit (Rₘₐₓ) der Sichtseite beider Proben: 98,4 µm

Rauheit der Rückseite der Seitenwand und des Beckenbodens nicht meßbar, das Formteil war allgemein und im besonderen um den Ausgußbereich sehr rauh, nach der mechanischen Bearbeitung traten Löcher auf, so daß die Dichtigkeit des Ausgusses nicht gegeben war.

### Beispiel 1:

1,8 kg PMMA einer normalen Type im Molekulargewichtsbereich M_{w} von 50 000 bis 200 000 wird in 8,2 kg MMA gelöst und wie in Vergleichsbeispiel 1 mit Entformungshilfsmittel und Vernetzer versetzt. Dann wird mit 17 kg Cristobalitmehl (alle Partikel < 200 µm, silanisiert, in der Kongrößenverteilung 5 % > 100 µm, 42 Gew.-% > 32 µm) auf einen Füllstoffgehalt der Gießmasse von 63 Gew.-% eingestellt. Zusätzlich werden 0,135 kg Mikrohohlkügelchen vom Typ Expancell (Type 091DE80 der Firma Akzo Nobel, Schweden) zugegeben (0,5 Gew.-%). Das Volumen der PMMA-Matrix beträgt 10 000 cm³, das Volumen des Füllstoffes 7 391 cm³, das Volumen der Mikrohohlkügelchen beträgt 6 750 cm³. Dies entspricht einem Volumenanteil von 28 % an der Gießmasse. Die Gießmasse ist bei einem Befülldruck von 3 bar komprimierbar.

Nach Zusatz von Peroxiden wie in Vergleichsbeispiel 1 wird in geeigneten Formenhohlkörpern polymerisiert, so daß eine Küchenspüle entsteht. Die Befüllzeit betrug ca. 45 sec., der Befülldruck wurde auf 3 bar eingestellt. Es konnte festgestellt werden, daß nach vollständiger Füllung des Werkzeuges noch Masse durch Komprimierung nachgefüllt werden konnte. Der Befülldruck (3 bar) wurde deshalb für einige Sekunden nach vollständiger Befüllung belassen. Es wurde eine Volumenkomprimierung von ca. 12 % bei 3 bar erreicht.

Dies wurde als ausreichend gefunden, um eine Schrumpfkompensierung der unmodifizierten Gießmasse von ca. 10 Vol.-% zu erzielen. Von einer Probe aus dem Beckenboden (9 mm dick) und der Seitenwand (7 mm dick) des Formteils wurden die Schlagzähigkeit und die Rauheit der Sicht- und Rückseite bestimmt.

### Ergebnisse:

Schlagzähigkeit beider Proben: 2,3 kJ/m²
   Die Schlagzähigkeit ist ausreichend für eine bestimmungsgemäße Verwendung des Formteils.
Rauheit (Rₘₐₓ) der Sichtseite beider Proben: 0,96 µm
Rauheit (Rₘₐₓ) der Rückseite beider Proben: 4,6 µm

Beide Rauheitswerte entsprechen den Rauheitswerten der verwendeten Formenoberflächen, d. h. in den beprobten Bereichen hat während der Polymerisation keine Ablösung der Gießmasse von den Werkzeugoberflächen durch chemischen Schrumpf stattgefunden.

### Beispiel 2:

Die Ergebnisse dieses Beispiels sind mit Vergleichsbeispiel 2 zu vergleichen.

2,0 kg PMMA einer normalen Type im Molekulargewichtsbereich M_{w} von 50 000 bis 250 000 wird in 8,0 kg MMA gelöst und wie in Vergleichsbeispiel 2 mit Entformungshilfsmittel und Vernetzer versetzt. Dann werden 27 kg eines kantengerundeten Sands im Korngrößenbereich von 200 bis 2 000 µm (eine Mischung aus den Typen 1/8 und 2/9 SIG silanisiert der Firma Dorfner in Amberg, Deutschland) zugegeben, was einen Füllstoffanteil der Gießmasse von 73 % ausmacht. Zusätzlich werden 0,037 kg Mikrohohlkügelchen Expancell (Type 091DE80 der Firma Akzo Nobel, Schweden) zugegeben. Das Volumen der PMMA-Matrix beträgt 10 000 cm³, das Volumen des Füllstoffes beträgt 10 189 cm³, das Volumen der Mikrohohlkügelchen 1 850 cm³. Der Volumenanteil der Mikrohohlkügelchen beträgt 8,4 %. Nach dem Zusatz von Peroxiden wie in Vergleichsbeispiel 2 wird die Masse in geeigneten Formen so polymerisiert, daß die Gebrauchsseite des Formteils nach unten zeigt. Die Befüllzeit betrug ca. 25 sec., der Befülldruck betrug 2 bar. Bei diesem Druck findet eine Komprimierung der Gießmasse um ca. 4 Vol.-% statt, was für eine fast vollständige Schrumpfkompensation der besonders hochgefüllten Basisrezeptur ausreicht.

Die flächenmäßige Kornverteilung des Füllstoffs im Formteil ist sehr gleichmäßig, gleichzeitig hat ein leichtes Absinken des Füllstoffes auf die Gebrauchsseite des Formteils stattgefunden. Die Rückseite des Formteils (Küchenspüle) ist teilweise etwas rauh, der Ausgußbereich der Rückseite weist nach dem Befräsen aber keinerlei Löcher auf, die die Dichtigkeit einer montierten Ablaufgarnitur beeinträchtigen könnten. Es konnte festgestellt werden, daß nach vollständiger Füllung des Werkzeuges noch Masse durch Komprimierung nachgefüllt werden konnte. Der Befülldruck wurde deshalb für einige Sekunden nach vollständiger Befüllung belassen. Von einer Probe aus dem Beckenboden (11 mm dick) und der Seitenwand (7 mm dick) des Formteils wurden die Schlagzähigkeit und die Rauheit der Sichtseite bestimmt. Die Rückseite wurde visuell beurteilt.

### Ergebnisse:

Schlagzähigkeit beider Proben: 2,8 bis 4,2 kJ/m²
Rauheit der Sichtseite beider Proben: 35 bis 42 µm

Die Rückseite der Spüle ist zwar relativ rauh, aber wesentlich glatter und gleichmäßiger als in Vergleichsbeispiel 2. Im Außenbereich gibt es nach dem Befräsen außerdem keine Blasen, die die Dichtigkeit des montierten Formteils beinträchtigen könnten.

### Beispiel 3:

1,5 kg Elastomerpartikel (Typ VP 445006 der Firma Wacker, Burghausen, Deutschland) werden in 8,5 kg MMA sorgfältig dispergiert (Agglomerate < 100 µm) und wie in Vergleichsbeispiel 1 mit Entformungshilfsmittel und Vernetzer versetzt. Dann wird mit 17 kg Cristobalitmehl (alle Partikel < 200 µm, silanisiert, in der Korngrößenverteilung 5 % > 100 µm, 42 Gew.-% > 32 µm) auf einen Füllstoffgehalt von 63 Gew.-% der Gießmasse eingestellt. Zusätzlich werden 0,162 kg Mikrohohlkügelchen vom Typ Expancell (Type 091DE80 der Firma Akzo Nobel, Schweden) zugegeben (0,6 Gew.-%). Das Volumen der modifizierten PMMA-Matrix beträgt 10 000 cm³, das Volumen des Füllstoffes 7 391 cm³, das Volumen der Mikrohohlkügelchen 8 100 cm³, was einem Volumenanteil von ca. 32 % entspricht. Nach Zusatz von Peroxiden (wie in Vergleichsbeispiel 1) wird in geeigneten Formenhohlkörpern polymerisiert, so daß eine Küchenspüle entsteht. Die Befüllzeit betrug ca. 11 sec., der Befülldruck wurde auf 2 bar eingestellt. Es konnte festgestellt werden, daß nach vollständiger Füllung des Werkzeuges noch Masse durch Komprimierung nachgefüllt werden konnte. Der Befülldruck wurde deshalb für einige Sekunden nach vollständiger Befüllung belassen. Es wurde eine Volumenkomprimierung von ca. 10 % bei 2 bar erreicht. Dies ist ausreichend, um eine Schrumpfkompensierung der unmodifizierten Gießmasse von ca. 10 Vol.-% zu erzielen.

Von einer Probe aus dem Beckenboden (5 mm dick) und der Seitenwand (5 mm dick) des Formteils wurden die Schlagzähigkeit und die Rauheit der Sicht- und Rückseite bestimmt.

### Ergebnisse:

Schlagzähigkeit beider Proben: 3,4 bis 6,2 kJ/m²
Rauhigkeit (Rₘₐₓ) der Sichtseite beider Proben: 4,7 bis 9,7 µm
Rauhigkeit (Rₘₐₓ) der Rückseite beider Proben: 5,1 bis 8,0 µm

Die Werte entsprechen ungefähr den Werten der abformenden Werkzeugoberflächen.

### Beispiel 4:

7,89 kg PMMA einer normalen Type im Molekulargewichtsbereich M_{w} von 50 000 bis 250 000 werden in 18,4 kg MMA gelöst und mit Entformungshilfsmittel (70 g Stearinsäure der Fa. Merck, Deutschland) und Vernetzer (400 g Trimethylolpropantrimethacrylat der Fa. Degussa, Deutschland) versetzt. Zusätzlich werden 0,742 kg Mikrohohlkügelchen der Type Dualite (Type 6017AE04 der Firma Pierce & Stevens Corporation, Buffalo, N. Y., USA) zugegeben. Das Volumen der PMMA-Matrix beträgt 26 258 cm³, das Volumen der Mikrohohlkügelchen 5 708 cm³. Der Volumenanteil der Mikrohohlkügelchen beträgt ca. 18 %. Nach dem Zusatz von Peroxiden (80 g Perkadox 16 und 160 g Laurox, jeweils von der Fa. Akzo, Niederlande) wird die Masse in geeigneten Formen so polymerisiert, daß die Gebrauchsseite des Formteils nach unten zeigt. Die Befüllzeit betrug ca. 100 sec., der Befülldruck betrug 4 bar. Bei diesem Druck findet eine Komprimierung der Gießmasse um ca. 15 Vol.-% statt, was für eine fast vollständige Schrumpfkompensation der nicht mit anorganischen Füllstoffen versetzten Basisrezeptur ausreicht.

Von einer Probe aus dem Beckenboden (9 mm dick) und der Seitenwand (7 mm dick) des Formteils wurden die Schlagzähigkeit und die Rauheit der Sichtseite und Rückseite bestimmt.

### Ergebnisse:

Schlagzähigkeit beider Proben: 3,6 kJ/m²
Rauheit (Rₘₐₓ) der Sichtseite beider Proben: 1,6 µm
Rauheit (Rₘₐₓ) der Rückseite beider Proben: 5,3 µm

Die gemessenen Rauheiten entsprechen ungefähr den Rauheiten der Werkzeugoberflächen.

### Vergleichsbeispiel 3:

1,8 kg PMMA einer normalen Type im Molekulargewichtsbereich M_{w} von 50 000 bis 200 000 wird in 8,2 kg MMA gelöst und wie in Vergleichsbeispiel 1 mit Entformungshilfsmitteln und Vernetzer versetzt. Dann wird mit 17 kg Cristobalitmehl (alle Partikel < 200 µm, silanisiert, in der Korngrößenverteilung 5 % > 100 µm, 42 Gew.-% > 32 µm) auf einen Füllstoffgehalt der Gießmasse von 63 Gew.-% eingestellt. Zusätzlich werden 0,135 kg unvorexpandierte Mikrohohlkügelchen vom Typ Expancell (Type 051DU80 der Firma Akzo Nobel, Schweden) zugegeben (0,5 Gew.-%). Das Volumen PMMA-Matrix beträgt 10 000 cm³, das Volumen des Füllstoffes 7 391 cm³, das Volumen der Mikrohohlkügelchen beträgt 113 cm³. Dies entspricht einem Volumenanteil von 0,68 % an der Gießmasse. Im expandierten Zustand würden diese Mikrohohlkügelchen mehr als das 40fache Volumen aufweisen, entsprechend einem theoretischen Volumenanteil in der Rezeptur von mehr als 20 Vol.-%. Die Gießmasse ist nicht komprimierbar. Nach Zusatz von Peroxiden wird in geeigneten Formenhohlkörpern polymerisiert, so daß eine Küchenspüle entsteht. Die Befüllzeit betrug ca. 45 sec., der Befülldruck wurde auf 3 bar eingestellt. Es konnte festgestellt werden, daß nach vollständiger Füllung des Werkzeuges keine Masse durch weitere Druckanwendung nachgefüllt werden konnte; obwohl der Befülldruck deshalb für einige Sekunden nach vollständiger Befüllung belassen wurde. Es wurde keine Volumenkomprimierung und keine Schrumpfkompensierung erzielt, obwohl die Aushärtetemperaturen (s. o.) den Temperaturen für die Expansion der Hohlkügelchen entsprechen (Temperaturbereich 80 bis 130 °C).

Von einer Probe aus dem Beckenboden (9 mm dick) und der Seitenwand (7 mm dick) des Formteils wurden die Schlagzähigkeit und die Rauheit der Sichtseite bestimmt, die Rauheit der Rückseite wurde visuell bestimmt.

### Ergebnisse:

Schlagzähigkeit beider Proben: 4,8 kJ/m²
   Die Schlagzähigkeit ist ausreichend für eine bestimmungsgemäße Verwendung des Formteils.
Rauheit (Rₘₐₓ) der Sichtseite beider Proben: 1,6 µm
   Diese Rauheit entspricht ungefähr der Rauheit der abbildenden Oberfläche.
Rauheit der Rückseite beider Proben: nicht meßbar
   Die Oberfläche der Rückseite ist recht rauh und bei Verschmutzung nicht mit einem Putztuch reinigbar.

## Patentansprüche

1. Gießmasse für die Herstellung von Sanitärformteilen, umfassend einen auf Methylmethacrylat basierenden Sirup sowie bis zu 85 gew. % eines anorganischen Füllstoffes, bezogen auf die Gießmasse, **dadurch gekennzeichnet, daß** die Gießmasse komprimierbare, treibmittelgefüllte Mikrohohlkügelchen mit einer in Methylmethacrylat im wesentlichen unlöslichen Kunststoffwandung umfaßt, wobei der Volumenanteil der Mikrohohlkügelchen am Gesamtvolumen der Gießmasse im Bereich von 5 bis 50 Vol.-% liegt.

2. Gießmasse nach Anspruch 1, **dadurch gekennzeichnet, daß** der Gehalt des Füllstoffs weniger als 75 Gew.-% beträgt.

3. Gießmasse nach Anspruch 2, **dadurch gekennzeichnet, daß** der Gehalt des Füllstoffs weniger als 20 Gew.-% beträgt.

4. Gießmasse nach einem der Ansprüche 1 bis 3, **dadurch gekennzeichnet, daß** der Volumenanteil der Mikrohohlkügelchen von 8 bis 45 Vol.-% beträgt.

5. Gießmasse nach einem der Ansprüche 1 bis 4, **dadurch gekennzeichnet, daß** die Partikelgröße der Mikrohohlkügelchen weniger als 500 µm beträgt.

6. Gießmasse nach einem der Ansprüche 1 bis 5, **dadurch gekennzeichnet, daß** die Mikrohohlkügelchen vorexpandierte Mikrohohlkügelchen sind.

7. Gießmasse nach einem der Ansprüche 1 bis 6, **dadurch gekennzeichnet, daß** der Sirup PMMA mit einem Molekulargewicht von 50.000 bis 250.000 (M_{w}) in einer Menge bis zu 20 Gew.-%, bezogen auf die Masse des Sirups, umfaßt.

8. Gießmasse nach einem der Ansprüche 1 bis 7, **dadurch gekennzeichnet, daß** die Gießmasse Elastomerpartikel oder -partikelagglomerate mit einer Teilchengröße kleiner 100 µm in einer Menge im Bereich von 5 Gew.-% bis < 20 Gew.-%, vorzugsweise mit einem Anteil von 10 bis 18 Gew.-%, bezogen auf die Masse des Sirups, enthält.

9. Gießmasse nach einem Anspruch 8, **dadurch gekennzeichnet, daß** das Elastomer der Partikel bzw. Agglomerate aus teilvernetztem Polymer besteht.

10. Gießmasse nach Anspruch 8 oder 9, **dadurch gekennzeichnet, daß** die Elastomerpartikel eine Kern-Hülle-Struktur aufweisen, wobei der Kern von einem Elastomer gebildet wird und die Hülle aus einem matrixverträglichen, im Sirup im wesentlichen unlöslichen Polymer.

11. Gießmasse nach Anspruch 10, **dadurch gekennzeichnet, daß** die Hülle chemisch an das Kernelastomer gebunden ist.

12. Gießmasse nach Anspruch 10 oder 11, **dadurch gekennzeichnet, daß** die Hülle ein thermoplastisches Polymer umfaßt.

13. Gießmasse nach Anspruch 10 oder 11, **dadurch gekennzeichnet, daß** die Hülle ein teilvernetztes Polymer umfaßt.

14. Gießmasse nach einem der Ansprüche 10 bis 13, **dadurch gekennzeichnet, daß** die Hülle im Sirup der Gießmasse quellbar ist.

15. Gießmasse nach einem der Ansprüche 10 bis 14, **dadurch gekennzeichnet, daß** die Hülle ein Acrylatpolymer umfaßt.

16. Gießmasse nach einem der Ansprüche 10 bis 15, **dadurch gekennzeichnet, daß** der Kern aus einem teilvernetzten Polysiloxan besteht, welches zur Bildung der Hülle mit einem Acrylatmonomer gepfropft ist.

17. Gießmasse nach einem der Ansprüche 10 bis 16, **dadurch gekennzeichnet, daß** der Gewichtsanteil des Kerns in den Kern-Hülle-Elastomerpartikeln einen Anteil von 40 bis 60 Gew.-% aufweist.

18. Sanitärformteil, hergestellt unter Verwendung einer Gießmasse gemäß einem der Ansprüche 1 bis 17.

19. Sanitärformteil in Form einer Küchenspüle gemäß Anspruch 18, wobei die Bodenstärke der Küchenspüle geringer ist als 7 mm.

20. Küchenspüle nach Anspruch 19, **dadurch gekennzeichnet, daß** die Bodenstärke ≤ 5 mm beträgt.

## Claims

1. Moulding composition for the production of sanitary-ware components, comprising a methylmethacrylate-based syrup and up to 85% by weight, expressed in terms of the moulding composition, of an inorganic filler, **characterised in that** the moulding composition comprises compressible, propellant-filled hollow microspheres having a plastic wall which is essentially insoluble in methyl methacrylate, the proportion by volume of the hollow microspheres to the total volume of the moulding composition being in the range of 5 to 50 % by vol.

2. Moulding composition according to Claim 1, **characterised in that** the filler content is less than 75 % by wt.

3. Moulding composition according to Claim 2, **characterised in that** the filler content is less than 20 % by wt.

4. Moulding composition according to one of Claims 1 to 3, **characterised in that** the proportion by volume of the hollow microspheres is from 8 to 45 % by vol.

5. Moulding composition according to one of Claims 1 to 4, **characterised in that** the particle size of the hollow microspheres is smaller than 500 µm.

6. Moulding composition according to one of Claims 1 to 5, **characterised in that** the hollow microspheres are pre-expanded hollow microspheres.

7. Moulding composition according to one of Claims 1 to 6, **characterised in that** the syrup comprises PMMA with a molecular weight (M_{w}) of 50,000 to 250,000 in an amount of up to 20 % by wt., expressed in terms of the mass of the syrup.

8. Moulding composition according to one of Claims 1 to 7, **characterised in that** the moulding composition contains elastomer particles or elastomer particle aggregates having a particle size smaller than 100 µm in an amount in the 5 % by wt. to < 20 % by wt. range, preferably with a proportion of 10 to 18 % by wt., expressed in terms of the mass of the syrup.

9. Moulding composition according to Claim 8, **characterised in that** the elastomer of the particles or aggregates consists of partially crosslinked polymer.

10. Moulding composition according to Claim 8 or 9, **characterised in that** the elastomer particles have a core/shell structure, the core being formed by an elastomer and the shell from a matrix-compatible polymer which is essentially insoluble in the syrup.

11. Moulding composition according to Claim 10, **characterised in that** the shell is chemically bonded to the core elastomer.

12. Moulding composition according to Claim 10 or 11, **characterised in that** the shell comprises a thermoplastic polymer.

13. Moulding composition according to Claim 10 or 11, **characterised in that** the shell comprises a partially crosslinked polymer.

14. Moulding composition according to one of Claims 10 to 13, **characterised in that** the shell can swell in the syrup of the moulding composition.

15. Moulding composition according to one of Claims 10 to 14, **characterised in that** the shell comprises an acrylate polymer.

16. Moulding composition according to one of Claims 10 to 15, **characterised in that** the core consists of a partially crosslinked polysiloxane, which is grafted with an acrylate monomer to form the shell.

17. Moulding composition according to one of Claims 10 to 16, **characterised in that** the proportion by weight of the core in the core/shell elastomer particles amounts to a proportion of 40 to 60 % by wt.

18. Sanitary-ware component, produced using a moulding composition according to one of Claims 1 to 17.

19. Sanitary-ware component in the form of a kitchen sink according to Claim 18, the bottom thickness of the kitchen sink being less than 7 mm.

20. Kitchen sink according to Claim 19, **characterised in that** the bottom thickness is ≤ 5 mm.

## Revendications

1. Masse de coulée pour la fabrication de pièces moulées de sanitaires, comprenant un sirop à base de méthylméthacrylate et jusqu'à 85 % en poids d'une charge minérale, rapportés à la masse de coulée, **caractérisée en ce que** la masse de coulée comprend des microbilles creuses pouvant être comprimées et qui sont remplies d'un agent propulsif et comporte une paroi en matière plastique essentiellement insoluble dans le méthylméthacrylate, le pourcentage en volume des microbilles dans le volume total de la masse de coulée se situant dans la gamme comprise entre 5 et 50 % en volume.

2. Masse de coulée selon la revendication 1, **caractérisée en ce que** le pourcentage de la charge est inférieur à 75 % en poids.

3. Masse de coulée selon la revendication 2, **caractérisée en ce que** le pourcentage de la charge est inférieur à 20 % en poids.

4. Masse de coulée selon l'une des revendi-cations 1 à 3, **caractérisée en ce que** le pourcentage en volume des microbilles creuses est compris entre 8 et 45 % en volume.

5. Masse de coulée selon l'une des revendi-cations 1 à 4, **caractérisée en ce que** la taille des particules des microbilles creuses est inférieure à 500 µm.

6. Masse de coulée selon l'une des revendi-cations 1 à 5, **caractérisée en ce que** les microbilles creuses sont des microbilles creuses préalablement expansées.

7. Masse de coulée selon l'une des revendi-cations 1 à 6, **caractérisée en ce que** le sirop contient du PMMA possédant un poids moléculaire compris entre 50 000 et 250 000 (M_{w}), en une quantité atteignant jusqu'à 20 % en poids, rapportée à la masse du sirop.

8. Masse de coulée selon l'une des revendi-cations 1 à 7, **caractérisée en ce que** la masse de coulée contient des particules élastomères ou des agglomérats de particules élastomères possédant une taille de particules inférieure à 100 µm, en une quantité située dans la gamme entre 5 % en poids et < 20 % en poids, de préférence avec un pourcentage compris entre 10 et 18 % en poids rapporté à la masse du sirop.

9. Masse de coulée selon la revendication 8, **caractérisée en ce que** l'élastomère des particules ou des agglomérats est constitué par du polymère partiellement réticulé.

10. Masse de coulée selon la revendication 8 ou 9, **caractérisée en ce que** les particules d'élastomère possèdent une structure à noyau et enveloppe, le noyau étant formé par un élastomère et l'enveloppe étant formée par un polymère compatible avec la matrice et essentiellement insoluble dans le sirop.

11. Masse de coulée selon la revendication 10, **caractérisée en ce que** l'enveloppe est liée chimiquement à l'élastomère du noyau.

12. Masse de coulée selon la revendication 10 ou 11, **caractérisée en ce que** l'enveloppe comprend un polymère thermoplastique.

13. Masse de coulée selon la revendication 10 ou 11, **caractérisée en ce que** l'enveloppe comprend un polymère partiellement réticulé.

14. Masse de coulée selon l'une des revendications 10 à 13, **caractérisée en ce que** l'enveloppe peut gonfler dans le sirop de la masse de coulée.

15. Masse de coulée selon l'une des revendications 10 à 14, **caractérisée en ce que** l'enveloppe comprend un polymère d'acrylate.

16. Masse de coulée selon l'une des revendications 10 à 15, **caractérisée en ce que** le noyau est constitué par un polysiloxane partiellement réticulé, qui est égoutté pour la formation de l'enveloppe avec un monomère d'acrylate.

17. Masse de coulée selon l'une des revendications 10 à 16, **caractérisée en ce que** le pourcentage en poids du noyau dans les particules d'élastomère à noyau et enveloppe comporte un pourcentage comprise entre 40 et 60 % en poids.

18. Pièce moulée pour sanitaire, fabriquée moyennant l'utilisation d'une masse de coulée selon l'une des revendications 1 à 17.

19. Pièce moulée pour sanitaire sous la forme d'un éviter de cuisine selon la revendication 18, l'épaisseur du fond de l'évier utilisé étant inférieur à 7 mm.

20. Evier de cuisine selon la revendication 19, **caractérisé en ce que** l'épaisseur du fond est ≤ 5 mm.
